# EUROPEAN PATENT SPECIFICATION

(11) **EP 4 236 003 B1**
(45) Date of publication and mention of the grant of the patent: **09.10.2024**
(21) Application number: 23158529.0
(22) Date of filing: 24.02.2023
(51) Int. Cl.: H02J 3/38, H02J 3/28, H02J 3/32

(54) **DATA CENTER SYSTEM AND METHOD OF OPERATING THE DATA CENTER SYSTEM**
DATENCENTERSYSTEM UND VERFAHREN ZUM BETRIEB DES DATENCENTERSYSTEMS
SYSTÈME DE CENTRE DE DONNÉES ET PROCÉDÉ DE FONCTIONNEMENT DU SYSTÈME DE CENTRE DE DONNÉES

(30) Priority: 24.02.2022 EP 22158675; 23.02.2023 US 202318173189
(43) Date of publication of application: 30.08.2023
(73) Proprietor: nLighten HQ B.V., 1119 NH Schiphol-Rijk (NL)
(72) Inventor: McCarthy, Chad, 60486 Frankfurt am Main (DE)
(74) Representative: Schulz Junghans Patentanwälte PartGmbB

(56) References cited:
- WO-A2-2007/018830
- CN-A- 104 242 442
- US-A1- 2019 036 345
- US-A1- 2019 079 473
- US-A1- 2021 363 651

## Description

The invention relates to a data center system, particularly a carbon-neutral data center system, a method for remodeling a conventional data center connected to the electricity grid as a first prime-rated electricity source as well as a method for controlling the data center system according to the invention.

Data centers are spaces which are designed to house and operate computer system, such as server and/or data storage networks, e.g. a cloud. Typically, data centers are comprised in dedicated rooms or buildings. Data centers require, on grounds of resilience, two independent power sources for provision with electricity. Data centers known in the art, are connected to the electricity grid (utility connection) as the prime-rated power source. The term 'prime-rated' in the context of the specification and as known by the skilled person particularly refers to power sources that are by design configured to provide electricity at full load for an unlimited number of hours per year. As a back-up power source, in case the electricity grid fails its supply function as a prime-rated source, the data centers comprise a standby rated power source.

The standby-rated source is configured to quickly generate electricity on demand, but only for a limited amount of time.

The standby-rated source is a fossil-fuel driven generator at the data center that is powered up, in case the electricity demand of the data center exceeds the supply capabilities of the electricity grid - typically in case of a power outage of the grid. Under these operating conditions, data centers leave a large carbon-positive footprint and place a constant load burden on electricity grids, which have variable renewable generation capacities, which may periodically be insufficient to supply them with carbon neutral energy. The operating cost of a data center operating in this fashion correlates directly with energy prices of the prime rated source that may vary periodically with the capacity available, correlating in turn with stability requirements of the electricity grid.

WO2007018830A2 discloses renewable energy power systems for incorporating renewable energy systems into existing power systems, particularly to integrate hydrogen generation means within a renewable energy power system. A plurality of ports is coupled to an electrolyzer for producing hydrogen gas from water and DC power. The hydrogen gas is pumped to high- pressure storage and, when released to a significantly lower pressure end-user tank, is routed through a variable- vane turbine that runs a motor-generator in generation mode to put DC power back on the multiport DC bus in the UPS.

CN104242442A discloses a dual-energy uninterruptible power supply unit with a conventional uninterruptible power supply module comprising a grid interface, a grid-side rectifier, a DC bus, a static switch, an inverter, a load, a bidirectional DC converter, an energy storage unit, and a grid-side rectifier.

While WO2007018830A2 and CN104242442A allow for supplying a data center with renewable energy, their integration into different data systems and different electric grids remains limited.

The invention is set out to provide a data center system to improve these problems. The solution to this objective is provided by a system having the features of claim 1, as well as by a remodeling method and a method for controlling the system.

The system solves the problem according to the invention by being capable of operating in a net carbon neutral regime having a reduced dependency on the electricity grid as the sole prime-rated energy source and by presenting a load profile to the grid which correlates with electricity grid renewable generation capacity, improving effectivity of renewable sources and assisting the migration of utilities toward a carbon neutral operation.

Advantageous embodiments are disclosed in the following and in the dependent claims.

According to a first aspect of the invention, a data center system comprises at least the following components:
a data center, and a power source module, wherein the data center is connected to at least two prime-rated electricity sources configured to provide electricity to the data center, wherein a prime-rated first electricity source is an electricity grid and wherein a second prime-rated electricity source is the power source module. The power source module comprises a gas-powered electricity generator to generate electricity from gas, wherein the power source module is connected to a gas network, wherein the power source module is further connected to the data center. The system is configured to provide electricity from the power source module to the data center, such as to reduce a load on the electricity grid and such that the data center may be supplied by the at least two prime-rated electricity sources simultaneously, wherein the system comprises a grid battery configured to supply electricity to the electricity grid.

The data center may comprise components configured to rectify or to convert the electricity from the power source module from AC to DC, such as a bidirectional converter, wherein the data center further comprises components that allow to synchronize the electricity to a frequency and a phase of the electricity provided by electricity grid.

According to a first alterantive of the invention, the system the system is configured to provide electricity from the power source module via the data center synchronously to the electricity provided by the electricity grid, wherein the electricity grid is connected to a common conducting element that is further connected to a bi-directional converter or a rectifier of the data center, wherein the power source module comprises a reciprocating gas engine configured to burn gas provided to the power source module to generate AC-electricity, wherein the power source module is connected to the common conducting element enabling grid stabilization with the synchronized electricity sources at the data center. According to a second alternative of the invention, the electricity grid is connected to a common conducting element that is further connected to a bi-directional converter, wherein the power source module is configured to generate DC electricity and comprises a fuel cell configured to convert gas into DC electricity, wherein the power source module is connected downstream of the bi-directional converter to power the data center or to convert the DC electricity to AC electricity via the bi-directional converter such as to use the converted and synchronized AC electricity for grid stabilization via the common conducting element upstream the bi-directional converter, wherein the data center comprises a further converter configured to convert DC-electricity provided by the power source module downstream of the bi-directional converter into AC-electricity to power a data center server of the data center.

According to an embodiment of the invention, the grid battery is configured and adapted such that an electricity requirement or demand of the electricity grid and/or the data center may be satisfied within 30 seconds, particularly within 15 seconds.

This way, the system is a rapid-response system that may react to power outages and sudden load changes without any delay.

According to another embodiment of the invention, the system is configured to provide electricity from the power source module synchronously to the electricity provided by the electricity grid, particularly wherein the electricity is provided the from the power source module via the data center.

According to another embodiment of the invention, the system is configured to provide electricity from the power source module to the data center, such as to export power to the electricity grid.

The capability of the system to simultaneously supply the data center with electricity from two prime-rated electricity sources allows reducing a load exerted by the data center on the electricity grid, when the electricity from the power source module is provided to the data center and/or reducing a load from the electricity grid that may not be caused by the data center, therefore achieving a stabilizing effect on the electricity grid by supplying the electricity from the power source to the electricity grid via the data center. This kind of electricity export to the electricity grid allows for flexible grid stabilization.

According to another embodiment of the invention, the system comprises a grid battery configured to store electricity.

The grid battery may be an AC grid battery or a DC grid battery depending particularly on whether the gas-powered electricity generator provides AC or DC electricity. The grid battery particularly allows for an instantaneous provision of electricity during a start-up phase of the gas-powered electricity generator, during which the gas-powered electricity generator may not be capable to provide a required amount of electricity, e.g. to instantaneously stabilize the electricity grid or to provide electricity to the data center. The grid battery therefore may be configured to supplement or entirely provide the electricity required during said start-up phase.

The grid battery may be electrically connected to an electrical connection element to which the gas-powered electricity generator is electrically connected as well. This allows for charging the grid battery via the gas-powered electricity generator. The system may comprise a controller or a controller system that is configured to control charging of the grid battery by the gas-powered electricity generator. The controller may alternatively or additionally be configured to determine a charge of the grid battery, particularly to estimate and/or determine a remaining grid battery capacity and/or to schedule a charging or discharging cycle of the grid battery. Charging may be achieved via the gas-powered electricity generator and/or by the electricity grid. The controller may be configured to control charging via the electricity grid.

According to another embodiment of the invention, the grid battery is connected to and/or comprised by the power source module, particularly such that the electricity from the battery is provided to the electricity grid from the power source module, particularly via the data center.

In case the grid battery is comprised by the power source module, the grid battery may be housed separately to the gas-powered electricity generator in the power source module.

According to another embodiment of the invention, the system comprises an energy conversion module that is connected to a local regenerative energy source as well as to the gas network, wherein the energy conversion module is configured to generate synthetic gas, comprising or consisting of hydrogen and/or methane using electricity from the regenerative energy source, wherein the energy conversion module is configured to feed the generated synthetic gas into the gas network.

It is noted that some of the following embodiments may require the conversion module, while others may solely require a source of gas, e.g. in form of the gas network. Therefore, embodiments that relate the power source module, components thereof, and/or the data center or components thereof to the energy conversion module, may also be related and understood as to relate to the gas network only, particularly in case the embodiment does not elaborate on components of the energy conversion module. The system particularly comprises a plurality of power source modules, a plurality of data centers, and particularly a plurality of energy conversion module. Therefore, the following embodiments particularly also relate to a system having a plurality of at least one of the components.

Particularly, gas may be produced at several energy conversion modules, wherein the system comprises and operates a plurality of power source modules and data centers, wherein any amount of produced gas at the energy conversion modules may be consumed by the plurality of power source modules, particularly wherein a number of energy conversion modules may be smaller than a number of power source modules. It is noted that also in the following paragraphs, the energy conversion modules do not necessarily have to be part of the system, but solely connected to the gas network. Production of gas at the energy conversion module and consumption of gas at the power source module may not occur concurrently but during opposite grid circumstances. Gas production may occur during an abundance of grid connected renewable generation capacity whereby gas consumption may occur during transient deficits in grid connected renewable generation capacity.

The problem according to the invention is solved by the proposed system, which on the one hand employs two prime-rated electricity sources for electricity supply of the data center, wherein in particular the second prime-rated energy source may be used for grid stabilization and/or energy demand management of the data center simultaneously. Both prime-rated energy sources are capable of powering the data center for extended, essentially unlimited periods at constant or varying loads.

The system creates a synergetic effect between the data center's varying energy demand and the oftentimes weather dependent renewable energy generation capacity of the electricity grid. As such, the system allows to lever the data center to assist grid stability in times of limited regenerative electricity generation and use the energy conversion module to reduce curtailment of renewable sources during excesses. Therefore, the data center system according to the invention increases the annual proportion energy produced from regenerative sources. The invention connects the technical field of data center operation with the energy-producing sector to provide a system that is operated in a carbon neutral fashion.

The data center system according to the invention is capable to run completely carbon neutral, particularly in case a sufficient amount of gas is generated in a carbon neutral fashion, e.g. from regenerative energy sources, and/or at the energy conversion module and/or in case a sufficient amount of energy is stored in the grid battery, as will be detailed in some following embodiments.

The system can be considered to comprise at least two main functional modules; one for the supply of synthetic gas - the energy conversion module, and/or the gas network - and one (the power source module) for local supply of electricity from the conversion of gas into electricity and/or from the grid battery, which may have been charged during a time of abundance of renewable grid sources, for powering the data center or for stabilizing the electricity grid. This allows maintaining a carbon neutral balance, in case the amount of generated gas e.g. by the energy conversion module is not exceeded by the gas consumption of the power source module and in case sufficient energy from carbon neutral sources is stored in the grid battery to cover transient periods. These functional modules may be split into physically separate and particularly premanufactured facilities. A respective plant within these facilities may be pre-designed and offsite prefabricated. The facilities may take the form of weatherproof containers for external placement or on skids for placement within an existing building shell. Within each facility configuration options are available depending on the local gas infrastructure requirements and the specification of the data center. Particularly, the energy conversion module is not necessarily collocated with the data center unless there is a local regenerative energy source close by as well. Typically, the energy conversion module may be collocated with the regenerative energy source. The amount of synthetic and thus carbon neutral gas generated by the energy conversion module, is particularly in proportion to an aggregate demand for electricity generation in the power source module.

For gas networks comprising gas with 0% - 25% hydrogen, the power source module may be configured to either run directly on the gas from the gas network, e.g. by burning the gas, e.g. in the reciprocating gas engine and producing AC electricity, or by extracting the pure hydrogen from the gas and by converting the extracted hydrogen e.g. by means of the fuels cell and producing DC electricity, or by combustion of the high purity hydrogen in the reciprocating gas engine. The latter mode of operation using high-purity hydrogen, may also assist in stabilization of hydrogen levels present in the gas network. The stabilizing effect of the system therefore comprises both gas network and electricity grid operations.

The gas networks may provide a blended gas comprising hydrogen in the amount of 0% to 25% and the corresponding remaining portion consisting of methane.

The gas from the gas network may be filtered by a filter in order to extract the hydrogen. In case the extracted hydrogen is combusted in the power source module, e.g. by the reciprocating gas engine, the filter may be a membrane filter, particularly a membrane filter extracting hydrogen at a purity of at least 90%, which is sufficient for the reciprocating gas engine. In case the fuel cell is to be applied, the filter may comprise an additional filter, e.g. a pressure swing adsorption filter for increasing the purity of the extracted hydrogen.

The term 'regenerative energy source' in the context of the current specification particularly refers to a power source that generates electricity from regenerative sources, such as wind, sun light, tides and/or biogas. Therefore, the regenerative energy source may consist of or may comprise a wind turbine, a water turbine, a tidal power plant, a solar-thermal, a geo-thermal and/or solar module or a combination thereof. The regenerative energy source may also comprise a plurality of wind turbines, e.g. in form of a wind park, a plurality of solar module, e.g. in form of a solar module park, etc.

The term 'local' in connection with the regenerative energy source particularly refers to the energy conversion module to be arranged in a proximity of the regenerative energy source, particularly such that the generated electricity of the regenerative energy source is not transported across distances along which electrical energy losses or transmission and distribution charges become prohibitive. The proximity may be in the range of 0 km to 100 km, more particularly in the range of 0 km to 20 km or in the range 0 km to 10 km. Such proximity may be understood as collocated in the context of the current specification, when relating to the energy conversion module and the regenerative energy source.

It is noted that the regenerative energy sources may not be comprised by the energy conversion module, but the energy conversion module may be located in the proximity of such power sources.

The energy conversion module may be configured for an electrolyzer power of between 2MW and 20MW, resulting in a net power equivalent gas production in the range of about 1 MW to 10MW.

The term `gas network' particularly refers to a gas network that is provided with gas from many gas sources. The gas network is particularly configured to store and to transport the gas, to provide the power source module with gas (not necessary with the same gas that has been produced by the energy conversion module), and particularly to take in gas from the energy conversion module. As such, the gas network may be considered as a delocalized gas reservoir.

The gas in the gas network, may consist of or comprise methane and/or hydrogen. It is common that gas networks carry a mix or a blend of methane and hydrogen and are fed by gas from various sources.

According to another embodiment of the invention, the gas network comprises gas that has been generated from regenerative and/or renewable energy sources, i.e. the gas network does not only or not all comprise gas from fossil gas sources
The term "electricity grid" particularly refers to an interconnected network for electricity delivery from producers to consumers. The electricity grid may extend over the area of several square kilometers and may cover a whole country. The electricity grid may comprise a plurality of electricity grids that are interconnected and synchronized. Particularly, the electricity grid as an AC electricity grid.

According to another embodiment of the invention, the energy conversion module is configured to use electricity generated from regenerative energy sources only.

The energy conversion module is configured to generate synthetic gas, comprising hydrogen and/or methane. Further, according to another embodiment of the invention, the synthetic gas from the energy conversion module consists of hydrogen or methane. Which kind of synthetic gas the energy conversion module generates depends on its specific layout and configuration of the energy conversion module.

Particularly, the energy conversion module is configured to intermittently generate gas, particularly in case an energy surplus is generated by the regenerative energy source(s). This way, the system inherently has the capability to produce synthetic gas exclusively from carbon neutral electricity sources.

The power source module, is configured to burn or to convert the gas from the gas network into electricity on demand but also, possibly, in a prime-rated fashion. In order to maintain a carbon neutral energy production, the amount of gas burned or converted may correspond to the amount of gas fed into and stored within the gas network by the energy conversion module.

In this context is it noted that the term 'gas' particularly excludes the notion of diesel, gasoline, kerosine or a similar fuel that is liquid at room temperature and atmospheric pressure.

According to another embodiment of the invention, the data center further comprises a standby electricity source in form of an uninterruptible power source (UPS). The UPS may be a chargeable battery assembly.

Further, particularly, in contrast to conventional data center systems, the system according to the invention is devoid of a liquid fuel burning engine configured, connected and used as a standby energy source, for the data center. The term 'fuel burning' is to be understood particularly in contrast to the notion provided for the term `gas', i.e. the invention is devoid of a generator designed for burning a fuel that is liquid under normal conditions, i.e. room temperature and atmospheric pressure. According to another embodiment of the invention, the system comprises a local gas storage connected to the power source module, particularly wherein the local gas storage is configured to provide gas stored in the local gas storage to the power source module, particularly in the event of a gas distribution outage or failure of the gas network. The gas stored in the local gas storage may be stored in liquid and/or pressurized form.

Thus, the data center system according to the invention, particularly while being devoid of an operationally connected liquid fuel burning generator, this embodiment allows storing fuel in liquid state (e.g. propane, butane). This may be suitable for locations where gas and grid failures occur concurrently and an extended autonomy period from the gas network is required.

The local gas storage may be configured to store methane sufficient to run the power source module for about 4 to 12 hours under full load. It is possible, that this capacity is extended, particularly for example, when the local gas storage comprises Propane and/or Butane (here the capacity may be as high as 48 h under full load).

The gas from the local gas storage is provided to the gas-powered electricity generator in gaseous form.

The local gas storage may be comprised by the power source module. This embodiment allows for a fail-safe generation of electricity for the second prime-rated electricity source, i.e. the power source module. The local gas storage is particularly a local facility. This is in contrast to the gas network that is not considered a local facility in the context of the current specification.

According to another embodiment of the invention, the energy conversion module is configured to use water from a water source. Further, the energy conversion module may be configured to use carbon dioxide and/or carbon monoxide from a carbon dioxide/monoxide source that is connected or may be comprised by the energy conversion module for generating synthetic gas. When the energy conversion module is designed to use the carbon dioxide, the synthetic gas generated at the energy conversion module is methane.

Particularly, the carbon dioxide source is a direct carbon capture facility, and/or a biogas facility generating biogas, particularly wherein in case the carbon dioxide source is the biogas facility, biogas obtained from the biogas facility is filtered for carbon dioxide and methane, wherein the filtered methane is provided to the gas network directly.

Filtering of the biogas may be achieved in the energy conversion module or externally. According to another embodiment of the invention, the electricity is provided from the power source module via the data center synchronously to the electricity provided by the electricity grid.

The term "synchronously" particularly refers to AC electricity that is in phase with the electricity from the electricity grid.

The synchronized electricity allows for an efficient electricity provision to the data center and/or the electricity grid. Depending on the kind of electricity generated by the power source module, i.e. AC or DC electricity, the data center may comprise various components for transforming the electricity from one kind into the other.

In case the electricity provided by the power source module is AC, the power source module may be connected to the data center such that the electricity can be provided in a synchronous manner to the data center. This allows reducing the load on and/or stabilizing the electricity grid. Particularly, grid stabilization is achieved by routing the electricity via the data center.

The connection to the data center may be controllable by a switch for connecting and disconnecting the power source module from the data center.

In case the electricity provided to by the power source module is DC, the data center comprises a DC-AC converter or a bidirectional converter for converting the electricity into AC that is synchronous to the electricity from the electricity grid and that may serve for grid stabilization.

In this embodiment the grid battery may be a DC battery, which may be comprised by the UPS or may be arranged as a separate DC battery elsewhere in the system. The grid battery may nonetheless be connected to the power source module e.g. via a DC-rail.

The conversion may take place in case the system is operated for grid stabilization. Depending on the data center components, it is possible to use the DC electricity directly for electricity supply for the data center components (rather than for grid stabilization). In case the components require AC currents, the DC electricity may be converted accordingly, preferably also in synch with the electricity from the electricity grid, to avoid phase shifts.

The DC electricity may also be connected to charge the UPS.

In order to facilitate the connection to the electricity grid and the power source module, the data center may comprise two electricity supply connections.

According to another embodiment of the invention, the system is configured to provide the electricity from the power source module to the data center, particularly only to the data center, particularly in case an amount of generated gas by the energy conversion module is equal to or greater than an amount of gas required to generate the electricity by the power source module, particularly wherein no electricity is provided in case the generated amount of gas is less than the amount of gas required to provide the electricity by the power source module.

The term 'amount' in the context of gas or electricity particularly refers to an energy equivalent, e.g. measured in units of MWh, that is comprised in the gas and/or the electricity. That is, the system according to this embodiment is configured and adapted to convert energy to the same amount from regenerative sources (e.g. by way of the energy conversion module) into gas that is fed into the gas network, and subsequently, e.g. at a different time, pending the required conditions, convert the same amount of gas into electricity at the power source module.

This embodiment allows for a net carbon neutral electricity production in the context of the data center system and grid stabilization.

According to another embodiment of the invention, the system is configured to activate the power source module based on estimated or calculated amount of gas or energy equivalent that is available for electricity generation to the power source module, particularly wherein said amount of gas is determined from or equals to a generated amount of gas or its energy equivalent processed and fed into the gas network e.g. by the energy conversion module, particularly such that the electricity generated by the power source module is carbon neutral.

The power source module may be configured to produce an electrical power rating of 0.5 MW to 2.5 MW per module depending on the size and configuration of the data center supplied.

The term 'activate' in the context of the power source module particularly refers to the process of initiating generation and provision of electricity to the data center and/or the electricity grid.

Further, the system may be configured to activate the power source module based on an available volume of regeneratively produced amount of gas, e.g. at the energy conversion module that may be converted to electricity at the power source module, particularly in combination with an amount of energy from carbon neutral sources stored in the grid battery available for export to the grid for stabilization.

This allows operating the system in a cost-efficient manner, particularly as the system is configured to convert the produced green gas into electricity at varying time points and at varying rates of gas production and/or consumption, and particularly as the system is configured to charge the grid battery during surpluses in renewable energy and return electricity when the grid requires stabilization, e.g. via the grid battery and/or the gas-powered electricity generator.

The term 'green gas' in the context of the current specification particularly refers to gas produced e.g. by the energy conversion module using the electricity from the regenerative energy source and particularly further, carbon dioxide from a direct carbon capture facility and/ or biogas.

The production of electricity at the power source module may take place only in case there is an available volume of gas produced, particularly at the energy conversion module, available to the power source module to ensure the neutral carbon footprint operation of the system over an operating period. Production of gas, particularly at the conversion module and conversion to electricity at the power source module may take place at different times during day, month, or year.

According to another embodiment of the invention, the system is configured to activate the power source module and to provide the electricity from the power source module to the data center, particularly only to the data center
- in case the electricity grid fails to provide the electricity to the data center, e.g. in times of a grid outage, or in case the electricity grid fails to meet an energy demand, e.g. in form of an electricity demand of the data center; and/or
- in case the amount of generated gas, e.g. measured in an energy equivalent, from the energy conversion module is greater than the amount of consumed gas, measured in an energy equivalent, by the power source module.

In the latter case the generated electricity may be used for example a) for renumeration of the generated electricity, b) for producing heat for a heat recovery system, and/or c) to reduce a load from the electricity grid.

This embodiment discloses two distinct operational modes of the system that allow the system to make efficient use of regenerative energies.

In other words, the system is configured to control the power source module to use gas from the gas network and/or the local gas storage only to the amount of synthetic gas that has been generated or fed by the energy conversion module into the gas network such that a net amount of converted gas is on average zero and as the energy conversion module has a carbon negative record for gas production, a net carbon emission of the system is zero when the gas is converted back into electricity and consumed.

According to another embodiment of the invention, the system is configured to determine and to control, when and particularly to what amount the energy conversion module converts electricity from the local regenerative energy source to gas and/or when and particularly to what amount to feed the generated gas into the gas network. This embodiment allows the system to autonomously run the energy management from conversion to consumption. For controlling this process, the system may comprise a control system. The control system may be wireless and/or cable-based connected to the components of the system, wherein the control system is configured to receive information from the components, particularly as well as from the electricity grid, the regenerative energy source and the gas network, and to issue control commands to the components for controlling the components.

The rules according to which the energy conversion module produces gas may be governed by a surplus amount of electricity generated at the regenerative energy source. The latter being often-times dependent on weather or other external conditions.

According to another embodiment of the invention, the energy conversion module comprises a methanation plant configured to convert hydrogen to methane, wherein said methane is fed into the gas network.

According to another embodiment of the invention, the energy conversion module comprises an electrolyzer that is configured to convert electricity received from the regenerative energy source to hydrogen. Particularly, the electrolyzer is connected to a water source, such as a water network, supplying the electrolyzer with water for electrolysis. The hydrogen may be fed directly into the gas network or is further processed by the methanation plant as disclosed in the following embodiment. According to another embodiment of the invention, the methanation plant is connected to the electrolyzer, such that the hydrogen generated by the electrolyzer is converted by the methanation plant into methane. For this purpose, the methanation plant may be configured to use carbon dioxide and/or carbon monoxide from a corresponding carbon dioxide/monoxide source, such as a direct capture facility, for methane production. Methane produced in this fashion has a negative carbon footprint. Particularly, the electrolyzer and/or the methanation plant are powered by the electricity from the regenerative source.

According to another embodiment of the invention, the energy conversion module is connected to a biogas facility, particularly wherein the biogas consists of methane and carbon dioxide, wherein the biogas methane is filtered off and fed into the gas network and the carbon dioxide is provided to the methanation plant.

According to another embodiment of the invention, the methanation plant is connected to the carbon dioxide source, wherein said carbon dioxide source may be a carbon capturing facility, that is configured to capture carbon dioxide from the atmosphere, particularly to directly capture the carbon dioxide from the atmosphere.

According to another embodiment of the invention, the power source module, particularly the gas-powered electricity generator comprises the reciprocating gas engine configured to burn gas for example natural or synthetic natural gas provided to the power source module to generate electricity, wherein said electricity is AC electricity, particularly wherein the gas is provided by the gas network and/or the local gas storage, particularly wherein the reciprocating gas engine is configured and designed to indiscriminately burn, e.g. combust gas comprising or consisting of methane, hydrogen and/or a blend of methane and hydrogen, particularly a blend comprising up to 25% hydrogen. Moreover, the reciprocating gas engine may further be configured to combust liquified petroleum gas (LPG) in gaseous form, comprising or consisting of butane and/or propane. The latter may be stored on the local gas storage. The gas-powered electricity generator may consist of the reciprocating gas engine.

According to another embodiment of the invention, the grid battery is an AC grid battery configured to operate synchronously with the reciprocating gas engine. This embodiment allows for a parallel use of the grid battery and the reciprocating gas engine.

The reciprocating gas engine is a cost-efficient electricity generator that can be activated and deactivated on demand, while the grid battery may provide immediate electricity / power for grid stabilization, the reciprocating engine, once started, can run for an essentially unlimited timespan.

According to another embodiment of the invention, the power source module, particularly the gas-powered electricity generator comprises the fuel cell configured to convert gas into electricity. The gas-powered electricity generator may consist of the fuel cell.

This embodiment is configured to produce DC electricity. Fuel cells allow efficient conversion of gas into electricity and eliminate much vibration and noise emissions, as fuel cells do not comprise moving parts, in contrast to a reciprocating gas engine. According to another embodiment of the invention, the gas provided to the fuel cell consists of hydrogen, particularly wherein the fuel cell is a proton-exchange membrane fuel cell PEMFC - also known as polymer electrolyte membrane fuel cell - wherein the hydrogen is
- generated and provided from the gas network, particularly from the energy conversion module, particularly from the electrolyzer of the energy conversion module to the fuel cell,
- provided from the local gas storage, wherein the local gas storage is a hydrogen gas storage,
- provided from a methane reformer comprised by the power source module, wherein the methane reformer is connected to the gas network and configured to generate hydrogen from methane provided by the gas network, and/or
- provided from a filter assembly comprising a membrane filter combined with a pressure swing adsorption filter (PSA filter) connected to the gas network and configured to separate hydrogen from a blended hydrogen-methane gas mixture provided by the gas network.

In case the hydrogen is provided from the methane reformer, the hydrogen is obtained from methane. Further, the methane reformer may be configured to produce carbon dioxide and to receive water from a water source.

Particularly, the methane reformer or the combined membrane and PSA filter is further connected to the fuel cell so as to provide the fuel cell with hydrogen generated by the methane reformer or the combined membrane and PSA filter.

This embodiment allows to operate a PEMFC as a power source with hydrogen obtained from different sources.

According to another embodiment of the invention, the fuel cell is an integrated fuel cell assembly that is configured to convert methane to hydrogen, particularly to pure hydrogen for producing electricity.

This embodiment allows for using gas networks transporting methane or hydrogen or a blend of methane and hydrogen in combination with a fuel cell.

According to another embodiment of the invention, the power source module is configured to generate electricity that is DC electricity, and particularly to supply the DC electricity to the data center.

The advantages of DC and AC electricity connection to the data center have been elaborated in previous embodiments already. The DC electricity generation is particularly efficient in combination with a fuel cell.

According to another embodiment of the invention, the grid battery is configured to instantaneously supply electricity to the electricity grid during start-up times of the gas-powered electricity generator of the power source module.

According to another embodiment of the invention, the data center comprises an uninterruptible power source (UPS), particularly comprising a battery assembly, wherein the UPS is connected to the power source module, such that the power source module provides the UPS with electricity for charging and such that the UPS supports the fuel cell transiently for sudden changes in load and export of electricity to the grid. The latter allows the grid battery to be included in the UPS.

This embodiment provides synergistic effects for power source modules comprising a fuel cell, as the electricity produced by fuels cells does not need to be rectified for charging the UPS.

Therefore, depending on the kind of electricity (AC or DC) provided by the power source module, the electricity may be rectified.

It is advantageous to locate the UPS in the data center rather than in the power source module, particularly as this allows a common and unified construction layout for the data center, as it may be designed for both kind of power source modules - the ones that provide DC electricity and the ones that provide AC electricity.

According to another embodiment of the invention, the data center is configured to convert DC electricity to AC electricity for coupling to the electricity grid, such as to reduce a load on the electricity grid and/or to feed AC electricity into the electricity grid to stabilizing effect. In this embodiment, the UPS may transiently be used to partially or fully support the fuel cell to reduce a load on the electricity grid.

Particularly, the AC electricity is converted such that is synchronous with the AC electricity provided by the electricity grid.

According to another embodiment of the invention, the grid battery is configured to instantaneously supply, particularly instantaneously and transiently supply electricity to the electricity grid, particularly during start-up times of the gas-powered electricity generator of the power source module.

According to another embodiment of the invention, the grid battery is configured to store electricity provided by the gas-powered electricity generator of the power source module and/or the electricity grid.

For this purpose, the system may comprise a controller configured to control the grid battery's power supply to the electricity grid or the grid battery's charging times. According to another embodiment of the invention, the grid battery is connected to and/or comprised by the power source module.

According to another embodiment of the invention, the the grid battery (14) is comprised by the UPS.

According to another embodiment of the invention, the power source module is comprised in a first facility, such as a first container or a first pod local to the data center, particularly wherein the energy conversion module is comprised in a second facility, such as a second container or a second pod, particularly wherein the control system is configured to control the plurality of components.

The term 'local' in the context of the location of the power source module and the data center particularly refers to a vicinity that may be in a range of up to 2 km, particularly in the range of up to 1 km or in direct vicinity e.g. in the range of 200 m.

On the one hand, this embodiment illustrates that the power source module and/or the energy conversion module are separate entities, i.e. facilities, that are comprised by separate buildings or containers.

On the other hand, this embodiment further allows for the power source module to be pre-fabricated and for a swift setup at a data center site or for remodeling of an existing conventional data center.

Similarly, the energy conversion module, when pre-fabricated for example in a container or a pod may be set up in close proximity to a regenerative energy source, which provides an increased flexibility for creating the system according to the invention.

According to another embodiment of the invention, the system is a modular system comprising a plurality of data centers, a plurality of power source modules, particularly in form of first facilities, and particularly one or more energy conversion modules, particularly in form of second facilities, wherein the plurality of power source modules are interconnected by the gas network, and wherein each power source module, particularly each first facility is arranged locally to one of the data centers and connected to the data center of the plurality of data centers, particularly wherein each energy conversion module, particularly each second facility of the one or more energy conversion modules is connected to a local regenerative energy source and the gas network.

Particularly, each energy conversion module is connected to a different local regenerative energy source. For example, the energy conversion module may be collocated to a wind park (wind farm) or a solar module park (solar farm).

Each power source module is connected to the gas network. Each power source module may further be connected via the gas network to the one or more energy conversion module(s) is/are connected to the gas network as well.

Each data center in turn is connected to an electricity grid or the electricity grid, wherein each power source module associated to the data center is therefore configured to provide electricity to the data center and to the electricity grid to which the data center is connected, particularly to synchronously provide the electricity to the electricity grid as elaborated in previous embodiments.

This embodiment allows for a scalable system, by adding more power source modules to data centers, e.g. during a remodeling effort, and by collocating more energy conversion modules to regenerative energy sources for generating carbon neutral or carbon negative gas.

According to another embodiment of the invention, the system comprises a heat recovery and distribution system that is configured to export heat recovered from the data center, particularly from a data center server comprised by the data center, and the power source module to a heat exchanger arranged and adapted to export the recovered heat into a district heating system.

This embodiment adds yet another facet of energy handling and sustainability of the system. The system may be even configured to generate electricity for the sake of producing heat at the power source module for distribution to a district heating system. As many data centers are located in urban areas, a heat transport distance is comparably short, which renders this embodiment as particularly energy efficient. Heat export is a cost driver. Therefore, heat export or demand could initiate activation of the 2^{nd} primary source, i.e. the power source module. This embodiment therefore allows to cover for heating deficits caused by a larger proportion of renewable grid generation which does not have heat as a by-product. Heat exported from a carbon neutral gas operation provides a second use for the energy absorbed by the data center and increases the operating efficiency of the power source module. Heat export also reduces the carbon footprint of a surrounding community or district which otherwise might burn natural gas to meet heating demand.

According to a second aspect, a method for remodeling a conventional data center to a data center system according to the invention is disclosed, wherein the conventional data center is connected or connectable to the electricity grid as a first prime-rated electricity source, the method comprising the steps of:
- Arranging for a data center system particularly having an energy conversion module connected to the gas network and a local regenerative energy source with the features of any of the preceding embodiments;
- Arranging the power source module with the features of any the embodiments disclosed for the first aspect of the invention, in local proximity to the data center as a second prime-rated electricity source;
- Connecting the power source module to the data center as a second prime-rated electricity source, particularly also connecting the power source module to the gas network and via the data center to the electricity grid;
- Installing a switch configured to control a provision of electricity from the power source module to the to the data center;
- Connecting the power source module and the data center as well as the switch to the data center system according to the invention, such that the system controls the switch and the provision of the electricity from the power source module to the data center, particularly for reducing a load on the electricity grid or supplying electricity to the grid via the data center or for supplying the data center with electricity.

The method of remodeling existing data centers allows for a cost-efficient generation of the data center system according to the invention. As many data centers are powered by the electricity grid as the sole prime-rated electricity source and have a standby-rated electricity source, such as a diesel generator, operation of these data centers places a constant load on an electricity grid with an increasingly variable generation capacity which may periodically have insufficient regenerative energy to supply them, leaves a positive carbon footprint and additionally contributes to air-pollution in urban areas.

Remodeling of such data centers integrates them into the community energy transition, assisting carbon reduction in other sectors and creating a net carbon negative effect for the data center on the surrounding energy system. It also reduces emissions other than carbon, particularly as burning synthetic gas, such as methane or hydrogen does not pollute the air to a degree that burning diesel does.

According to a third aspect, a method for controlling a data center system according to the invention is disclosed, the method comprising the steps of:
- Determining an amount of gas, e.g. in form of an energy equivalent, produced and fed into the gas network at the energy conversion module;
- Determining an amount of gas consumed, e.g. in form of an energy equivalent at the power source module
- In absence of a supply failure of the electricity grid and in case the amount of gas produced and fed by the energy conversion module is greater than an amount of gas consumed by the power source module, particularly initiating operation of the power source module and providing electricity to the data center to reduce a load on the electricity grid and/or to export electricity to the electricity grid via the data center, particularly wherein electricity is provided to the data center until the amount of gas consumed at the power source module equals the amount of gas produced at the energy conversion module,
- particularly wherein a duration is determined until the produced amount of gas is consumed by the power source module, wherein at the expiry of the duration, the power source module ceases to provide electricity and to consume gas from the gas network to grid stabilizing effect.

The method according to the third aspect, details an operating principle of the system that allows the system to exhibit a net carbon neutral emission profile, as only the amount of gas e.g. measured in an energy equivalent, generated at the energy conversion center is consumed for generating electricity at the power source module. As the generated gas is generated from regenerative energy sources and binds atmospheric carbon into the gas, burning said gas does not contribute to a net carbon dioxide emission.

Particularly, in order to coordinate the method steps, the control system receives a start signal from an electricity grid operator requesting grid stabilizing. Thus, the order of events may be given as follows: 1) determine an available gas amount and corresponding operation period for converting gas to electricity at the power source module, particularly set a price threshold corresponding with this operating period; 2) receiving a signal from the control system to start providing electricity via the data center to the electricity grid. 4) end the provision of electricity via a further signal from the control system.

The available amount of gas particularly is the amount of gas that has been produced at the energy conversion module and that has not yet been consumed at the power source module.

As the power source module is a prime-rated electricity source, the power source module can run uninterrupted for an essentially unlimited amount of time and contribute to either grid stabilization and/or data center powering.

The amount of gas produced and fed into the gas network at the energy conversion module may be determined with a meter at the energy conversion module. The meter may provide information on the amount of produced gas for the gas network to the control system.

Similarly, the amount of gas consumed at the power source module may be determined with a meter at the power source module. The meter may provide information on the amount of provided by the gas network to the control system.

It is noted that any method aspect of the system according to the invention, in particular any feature of the components of the system according to which the component is configured, adapted or designed to operate may be incorporated as a method step for the method of controlling the system according to the third aspect. In order to control the execution of the method steps, the control system may receive and process information obtained from the components, the electricity grid, such as e.g. an energy demand, electricity and/or gas pricing, the regenerative energy source, such as e.g. demand management, pricing, and the gas network.

At the control system, control commands may be issued to the components of the system causing the grid battery to charge, discharge to the electricity grid and/or to provide electricity in parallel, particularly synchronously to the gas-powered electricity generator, further causing the power source module to produce electricity according to the rules set out for the system and method. At the control system, control commands may be issued to the components of the system causing the the energy conversion module to produce gas.

The control system particularly allows for controlling the provision of electricity from the grid battery to the electricity grid during the start-up phase of the gas-powered electricity generator, e.g. the reciprocating gas engine. This allows for instantaneous grid stabilization.

Particularly, the grid battery has a capacity such that it may supply 1to 4 MW, particularly for at least 10 Minutes and not longer than 2 hours.

According to another embodiment of the third aspect, in case of a supply failure of the electricity grid, electricity is provided from the power source module to the data center to maintain data center operation, particularly independently of an available amount of gas.

This allows for completely relying on the power source module as a prime-rated power electricity source. Particularly, in this case, the power source module may generate electricity even though the amount gas generated at the energy conversion module may not cover the amount of gas consumed at the power source module during the failure. The gas imbalance will be tracked by the respective meters and the control system will re-balance the gas volume via production at the energy conversion module following the failure.

According to another embodiment of the third aspect, the method comprises the step of determining a heat demand of a district heating system to bolster a heating capacity, wherein heat generated at the power source module and by the data center, e.g. by the servers is provided to the district heating system in case there is a positive heat demand e.g. by means of the heat recovery and distribution system that is configured to export heat from the power source module to a heat exchanger arranged and adapted to export the recovered heat into the district heating system.

This embodiment of the method elaborates on the incorporation of the heat distribution system as detailed in previous embodiment of the data center system.

It is noted that embodiments, definitions, and features of components or methods steps relating to the first, the second, or the third aspect of the invention are interchangeably applicable to the first, second, and the third aspect. Therefore, advantageous features of components or method steps are equivalently applicable for all aspects of the invention.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.
- Fig. 1: shows a first exemplary embodiment of the system according to the invention;
- Fig. 2: shows a second exemplary embodiment of the system according to the invention;
- Fig. 3: shows a third exemplary embodiment of the system according to the invention;
- Fig. 4: shows exemplary embodiments of the power source module with a reciprocating gas engine;
- Fig. 5: shows an embodiment comprising a plurality of power source modules and data centers;
- Fig. 6: shows a fourth exemplary embodiment of the system according to the invention;
- Fig. 7: shows a fifth embodiment without any energy conversion module; and
- Fig. 8: shows a sixth embodiment without any energy conversion module.

### Exemplary Embodiments

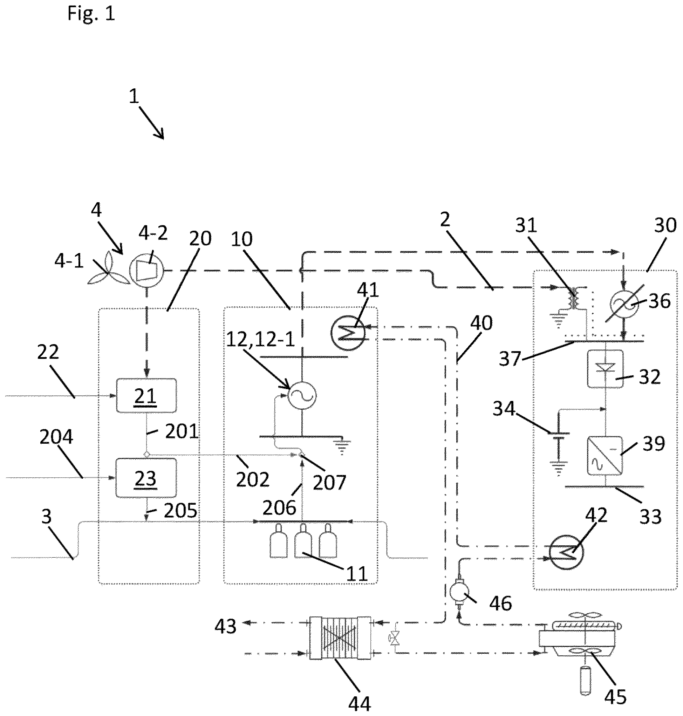

In Figs. 1 to 3, 6 to 8 various exemplary and schematic embodiments of a data center system 1 according to the invention is shown. Common to all embodiments is that the data center system 1 comprises the components of at least one power source module 10, at least one energy conversion module 20 and at least one data center 30. The data center 30 is connected to an electricity grid 2, wherein the electricity grid 2 forms a first prime-rated electricity source of the data center 30. A second prime-rated electricity source is the power source module 10, which is connected as well to the data center 30.

The first prime-rated electricity source may be powered by electricity that is for example obtained from burning fossil fuel or natural gas but as well by electricity that comes from so-called renewable or regenerative energy power sources. Thus, typically the electricity grid 2 provides a mix of electricity generated from renewable and fossil or non-regenerative energy sources. For example, by way of policy, it is possible that electricity provided from the electricity grid 2 is accounted to regeneratively generated electricity and thus the carbon footprint of electricity consumption by the data center 30 results in net neutral system operation. This situation is depicted in Fig. 1 to 3. The power source module 10 is connected to a gas network 3 that typically provides a blended gas mix, comprising methane with 0% to 25% hydrogen mixed thereto to the power source module. Optionally, a local gas storage 11 is located at the power source module 10, such that even in case a gas network 3 failure, the power source module 10 is operable.

Depending on the specific design of the power source module 10, the local gas storage 11 may comprise methane or hydrogen as the stored gas.

The gas storage 11 may be comprised by the power source module 10. The power source module 10 is located in a proximity to the data center 30, such that for example remodeling of an existing data center 30 (e.g. having a diesel generator 36) is possible. For this purpose, the power source module 10 may be comprised in a container or pod, in which it is pre-fabricated, such that the on-site installation of the power source module 10 is particularly facile.

The power source module 10 comprises a gas-powered electricity generator 12 adapted and configured to burn or convert the gas from the gas network 3 and/or the local gas storage 11 to electricity and to produce electricity for unlimited time intervals and under varying loads, such that said power source module 10 qualifies as a prime-rated electricity source. Depending on the kind of generator 12, the electricity is either DC or AC.

The power source module 10 is electrically connected to the data center 30. The connection depends on the kind of electricity the power source module 10 provides to the data center 30.

The data center 30 comprises various components configured to rectify or convert the electricity from the power source module 10 from AC to DC or vice versa, such as a bidirectional converter 32. Further, the data center 30 may comprise components that allow to synchronize the electricity to the frequency and phase of the electricity provided by electricity grid 2.

This allows to use the electricity from the power source module 10, to stabilize the electricity grid 2, e.g. by feeding the electricity to the grid 2 or by supplying the data center 30 with electricity, in both cases reducing the load from the electricity grid 2.

The power source module 10 therefore stabilizes the grid 2 particularly only via the data center 30 connection 37 with the electricity grid 2.

The power source module 10 may comprise a meter (not shown) for measuring and recording an amount of gas that has been taken from the gas network 3 and/or the local gas storage 11 as well as a meter (not shown) for measuring the amount of generated electricity.

The energy conversion module 20 is connected to at least one regenerative energy source 4, such as a wind turbine or a wind park 4-1, a solar park 4-2 or a solar module. Other regenerative energy sources are possible, such as a tidal plant, a geothermal plant etc. (not shown). The energy conversion module 20 is further connected to the gas network 3 and may comprise a meter for measuring the produced gas and the converted electricity.

Similar to the power source module 10, the energy conversion module 20 may be comprised in a container or pod, in which it is pre-fabricated, such that the on-site installation of the energy conversion module 20 is particularly facile.

The energy conversion module 20 is located in a vicinity of the regenerative energy source 4 in order to reduce any losses of electricity generated at the regenerative energy source 4. As the electricity generation of the regenerative energy source 4 typically depends on external circumstance, e.g. weather conditions, or the tide, the energy conversion module 20 is designed to power-up or ramp up from a minimum operating capacity any time there is a surplus of electricity generated at the regenerative energy source 4.

The energy conversion module 20 converts the electricity from the regenerative energy source 4 into gas. The gas may be methane, i.e. synthetic gas, or hydrogen or a mixture thereof. For this purpose, the energy conversion module 20 - in any case - comprises an electrolyzer 21 for transforming electricity from the regenerative source 4 to hydrogen. This is achieved by the additional intake of water from at least one water source 22.

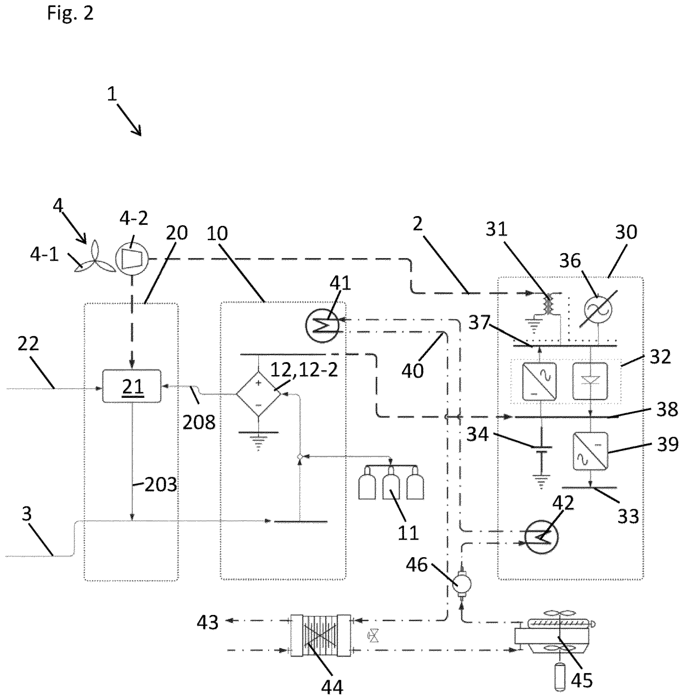

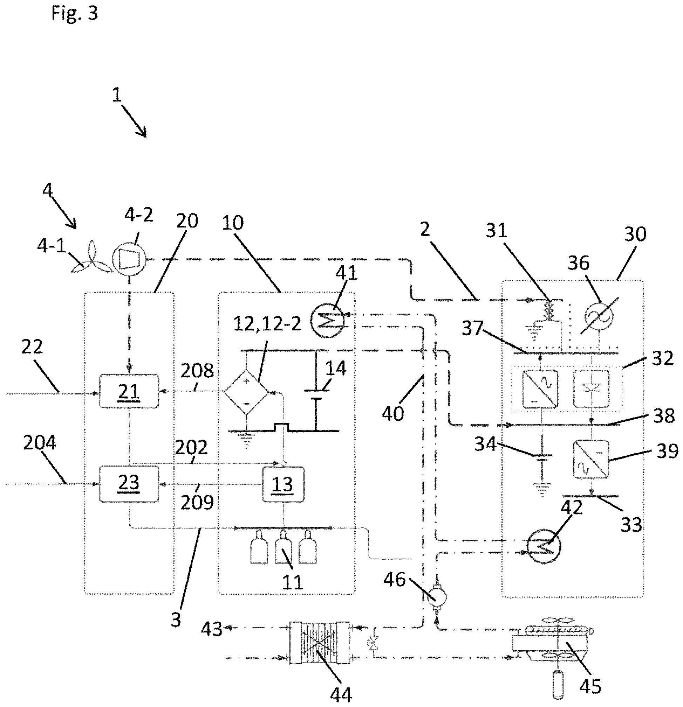

The produced hydrogen 201 may be used for feeding the hydrogen via a hydrogen connection 203 into the gas network 3 (cf. Fig. 2) or to directly supply 202 the power source module 10 in case the power source module is close to the energy conversion module 20 (cf. Fig. 1 and 3). The latter may be achieved by a separate connection 202 to the power source module 10.

The energy conversion module 20 is configured to feed the gas into the gas network 3. The gas network 3 in essence serves as a gas storage and an energy storage.

The energy conversion module 20 is configured to produce hydrogen and/or (synthetic) methane in case of an excess or surplus of regeneratively produced electricity relative to grid 2 demand, demand management, curtailment of the regenerative energy source from the grid 2 or market price changes in favor of green gas or hydrogen production. The data center 30 comprises a connection 31 to the electricity grid 2. The data center 30 comprises a bi-directional converter or rectifier 32 that allows to convert AC electricity from the electricity grid 2 to DC electricity and/or vice versa for grid stabilization.

In Figs. 1 to 3 a previous standby electricity source 36, e.g. a diesel generator, is shown (crossed out) to illustrate state of the art data center electricity supplies that are based on a connection to the electricity grid as the sole prime-rated electricity source and the diesel generator for fail-safe electricity supply.

The data center 30 further comprises a data server 33 and/or data storage 33 that is connected to the data network (not shown) to serve the purpose of the data center 30. In addition, the data center 30 comprises an uninterruptible power source (UPS) 34 that comprises a battery assembly. The UPS 34 is configured to act as a fail-safe electricity source for the data center 30, in case both prime-rated electricity sources would fail at the same time.

The UPS 34 may be charged with DC electricity from the bi-directional converter 32/ rectifier (cf. Fig. 1) or more directly by DC electricity provided by a DC power source module 10 (cf. Fig. 2 and 3).

In some embodiments the data center 30 is connected to the system 1 via a converter 39 (cf Fig. 1). The converter 39 and UPS 34 may be connected to the power source module via a DC-rail 38 (cf. Fig. 2 and 3).

The data center system 1 may optionally comprise a heat recovery and distribution system 40 that is configured to export heat recovered from the data center 30, particularly from the data center server 33 comprised by the data center, and the power source module 10 to a heat exchanger 41, 42, arranged and adapted to export the recovered heat into a district heating system 43.

The heat recovery system 40 further comprises a pump 46 for pumping a heat exchange liquid through the system 40, such that the heat exchangers 41, 42 take up the heat and such that the heat is transported further to an exchanging system 44 for the district heating system 43.

The heat exchanger 41 at the power source module 10 is particularly located at the gas-powered electricity generator 12.

As many data centers 30 are located in urban areas, a heat transport distance to the district heating system 43 is comparably short.

Similarly, as the power source module 10 is located in proximity of the data center 30, the heat recovery system 40 can be built comparably compact. The recovery system 40 may comprise an additional means for dissipating remaining heat or a reservoir of colder heat exchange liquid 45.

This optional heat recovery system 40 allows for using dissipated heat from the data center 30 and the power source module 10 for district heating rather than solely dissipating the heat to the surrounding.

The system 1 according to the invention can be driven in a zero-carbon emission mode, such that during operation the net carbon dioxide production is zero or below zero.

Now, turning specifically to the embodiment of the system as shown in Fig. 1, the energy conversion module 20 comprises the electrolyzer 21 configured to transform electricity from the regenerative energy source 4 to hydrogen. In addition, the energy conversion module 20 comprises a methanation plant 23 that is connected to the electrolyzer 21 to receive the generated hydrogen 201. The methanation plant 23 using carbon dioxide and/or carbon monoxide transforms the hydrogen into methane, i.e. synthetic gas. The carbon dioxide and/or carbon monoxide may be obtained from a direct capture facility (not shown) to which the energy conversion module 20 and in particular the methanation plant 23 comprised therein is connected 204.

The methane is provided to the gas network 2 by means of a methane connection 205. The energy conversion module 20 may also be connected to a biogas facility (not shown) and configured to feed the biogas into the gas network 2.

The embodiment shown in Fig. 1 allows the provision of methane to the gas network 2 and simultaneously or alternatively the provision of hydrogen to the power source module 10 by means of the separate connection 202. The separate connection 202 is an optional component, which may be realized in case a proximity of the energy conversion module 20 and power source module 10 is sufficiently close.

Fig. 1 further illustrates a variant of the power source module 10 that comprises a reciprocating gas engine 12-1 as the gas-powered electricity generator 12. The reciprocating gas engine 12-1 is configured to burn gas from the gas network 3 and to produce AC electricity from this process. The reciprocating gas engine 12-1 is configured to burn methane, hydrogen or a mixture thereof. Further, particularly as the gas is supplied from the local gas storage, which stores butane and/or propane, the reciprocating gas engine 12-1 may be configured to also combust said gases. In the exemplary embodiment shown in Fig. 1 the gas provided to the reciprocating gas engine 12-1 is methane or blended gas, i.e. methane with 0% to 25% hydrogen or even pure hydrogen. The local gas storage 11 in the embodiment depicted in Fig. 1 comprises methane.

Blending of the gas may be facilitated at the power source module 10 by mixing the gas inputs of 202 and 206 at a mixer 207, or wherein the gas from the gas network 3 may already comprise a methane hydrogen mix.

Using a reciprocating gas engine 12-1 as the electricity generating source of the power source module 10, allows for producing AC electricity that is then provided to the data center 30 via the same connection that may have been used before by the standby electricity source 36. The AC electricity is provided synchronous to the AC electricity provided by the electricity grid 2. For this purpose, the system 1 comprises appropriate means. Providing the electricity in synch with the electricity grid 2 allows for stabilizing the electricity grid via the data center 30. As can be seen, the electricity from the electricity grid 2 and the electricity from the power source module 10 share, i.e. are connected to a common conducting element 37 that enables grid stabilization with synched electricity sources at the data center 30. The common conducting element 37 is connected to the bidirectional converter 32 or rectifier 32 that transforms the AC electricity to DC electricity, which may be used to charge the UPS or that may be used for powering the data center's 10 components, such as the data server 33.

Due to the modular nature of the system 1, the power source module 10 is configured to generate electricity in the range from 0.5MW to 2.5MW per module, which on the one hand ensures that the power source module 10 qualifies as a prime-rated electricity source and on the other hand allows for arranging the power source module 10 in the vicinity of an existing data center 30, particularly in urban areas, where space limits sizes of power source modules particularly in terms of space constraints, and further in terms of heat generating, noise and/or pollution limitations.

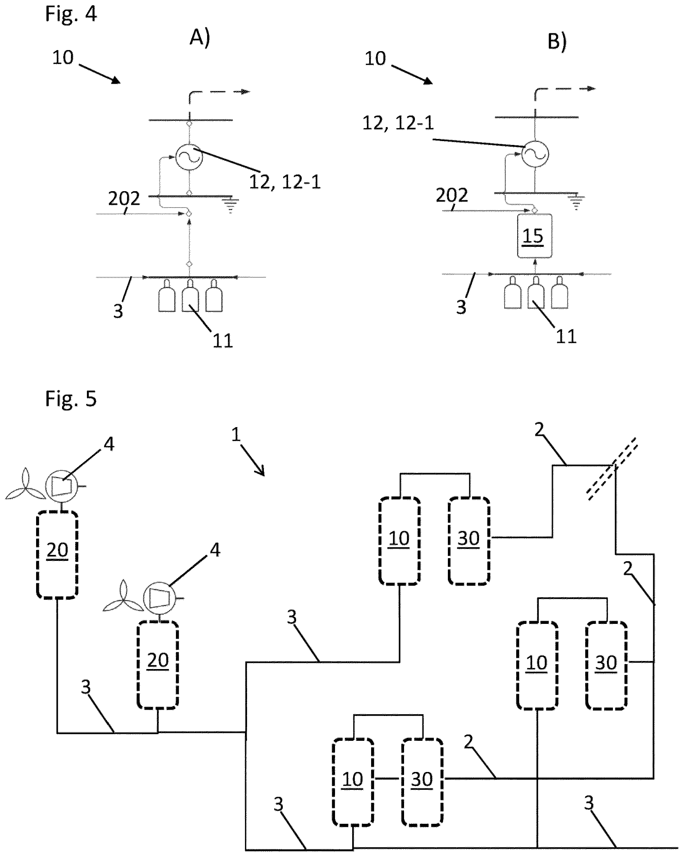

As the power source module 10 is comparably small, the system 1 may be expanded and scaled by connecting more power source modules to more data centers. Particularly, each data center 30 may be provided and equipped with its own power source module 10 or a plurality of modules (cf Fig. 5).

In the following, differences or additional components of the system 1 as described in the context of the previous Figures and examples are detailed. To reduce redundancy, components that remain essentially unchanged will not be addressed again.

Fig. 2 depicts an exemplary embodiment of the invention, wherein the energy conversion module 20 solely comprises the electrolyzer 21 and no methanation plant.

The hydrogen produced by the electrolyzer 21 is fed into the gas network 3 via connection 203. The gas network 3 may be configured to transport blended gas, i.e. methane and hydrogen, or pure hydrogen. Depending on the proximity of the energy conversion module 20 to the power source module 10, the power source module 10 may provide recovered water to the energy conversion module 20 via a separate connection 208. In the specific embodiment of Fig. 2, the gas network 3 is a hydrogen gas network 3.

The power source module 10, in contrast to the embodiment shown in Fig. 1, uses a fuel cell 12-2 as the gas-powered electricity generator 12.

The fuel cell 12-2 is connected to the hydrogen gas network 3 and is provided either via said gas network 3 or the local gas storage 11, which is a hydrogen gas storage in the located outside of the power source module 10, with (pure) hydrogen. The fuel cell 12-2 may be a proton-exchange membrane fuel cell (PEMFC) - also known as polymer electrolyte membrane fuel cell. This kind of fuel cell is very compact and light weight, has low operating core temperatures of <100°C and is able to rapidly accept load. Due to the nature of the fuel cell 12-2 the produced electricity is DC electricity. For this reason, the connection with the data center 30 is down-stream the bidirectional converter 32 of the data center 30. This allows to directly charge the UPS 34, to power the data center 30 or to the convert the DC electricity to AC electricity via the bi-directional converter 32 such as to use the converted and synchronized AC electricity for grid stabilization via the common conducting element 37 upstream the bi-directional converter 32.

As fuels cells are devoid of any moving parts, this embodiment provides a robust and sustainable data center system 1 with very low noise, vibration, particle, and gas emissions. Furthermore, this embodiment allows for the adaption and direct use of a hydrogen gas network.

Fig. 3 shows a variation of the invention, wherein in this example, the energy conversion module 20 comprises the methanation plant 23 and has in essence the same layout as the energy conversion module 20 as already detailed in Fig. 1. In addition to the energy conversion module 20 of Fig. 1, the energy conversion module 20 in Fig. 3 is optionally connected to a methane reformer 13 comprised in the power source module 10. The connection 209 provides carbon dioxide generated in the process of reformation to the methanation plant 23.

The reformer 13 allows to convert the methane for the gas network 3 to hydrogen that may then be used by the fuel cell 12-2 of the power source module 10. Optionally, the energy conversion module 20 may provide pure hydrogen via the separate connection 202 to the power source module 10 in case the energy conversion module 20 and the power source module 10 are located close to each other.

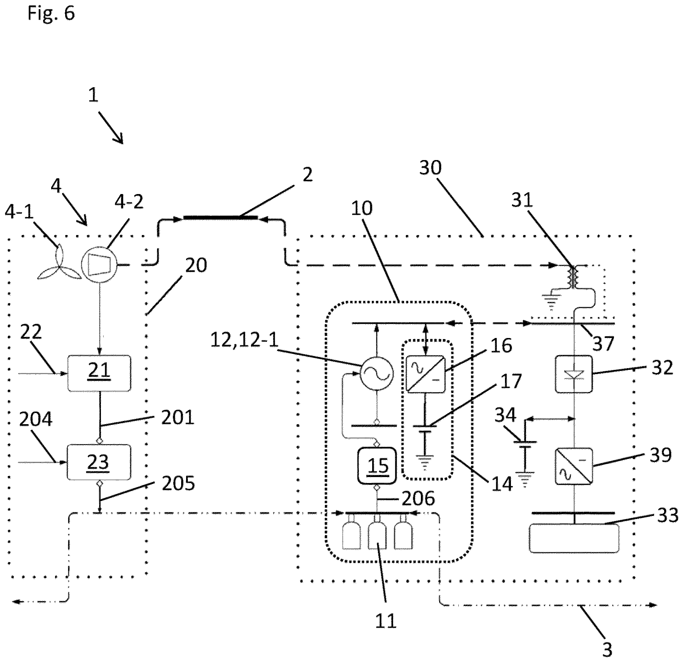

The power source module 10 further comprises a back-up battery assembly 14 for storing electricity, particularly for compensating sudden load changes on the power source module 10. The back-up battery assembly 14 is also referred to as grid battery 14 in the context of the current specification. The grid battery 14 is connected to the power source module 10 and may be even comprised by the power source module 10. The grid battery 14 is particularly configured to provide electricity during times, when the gas-powered electricity generator 12, in the example of Fig. 3 the fuel cell 12-2, is ramping-up electricity generation, which might take several minutes. The grid battery 14 in turn is configured to and capable of instantaneously provide electricity within seconds and thus allows complementing and even substituting the electricity generated by the fuel cell 12-2, and more general the gas-powered electricity generator 12, during a start-up phase, when electricity support is required e.g. for stabilizing the electricity grid 2. The grid battery 14 may be used in combination with the reciprocating gas engine 12-1 just as well in an analogue fashion (as for example shown in Fig. 6). The grid battery 14 may be a battery assembly and/or be comprised by the UPS (not shown). In case the grid battery is comprised by the UPS, the grid battery may be connected to the power source module via a DC-rail 38 to the power source module 10.

In case the gas network 3 provides a mix of methane and hydrogen, it is also possible that instead of a methane reformer 13, a membrane filter in combination with a PSA filter (cf. Fig. 4) is used for extracting pure hydrogen from the gas mix provided by the gas network 3.

Fig. 4A and B show similar embodiments of the power source module 10 comprising the reciprocating gas engine 12-1. In Fig. 4A, the reciprocating gas engine 12-1 is configured to run on methane and/or a mix of methane and hydrogen - and particularly even on LPG stored in the local gas storage 11. In Fig 4B, the reciprocating gas engine is configured to run on pure hydrogen. For this purpose, in case the gas network 3 is a mixed gas network 3, the power source module 10 comprises a filter assembly 15, with a membrane and/or a PSA filter, that extract the hydrogen from the gas mix, such that the reciprocating gas engine 12-1 is provided with pure hydrogen. For some reciprocating gas engines configured to combust hydrogen, it is sufficient that the filter assembly 15 solely comprises the membrane filter, as the reciprocating gas engine may not require hydrogen of particular high purity.

Fig. 5 shows an embodiment of the system 1 that comprises plurality of power source modules 10 and data centers 30 as well as two energy conversion modules 20.

This example illustrates the scalability of the system 1 and the possibility to successively transform an existing conventionally powered data center infrastructure to the system 1 according to the invention to incorporate the data centers in a carbon neutral data center system 1.

Fig. 6 shows a similar embodiment to Fig. 1. Identical reference signs refer to the same features and components as in Fig. 1.

In the following the main differences to the embodiment of Fig.1 will be highlighted. In the embodiment of Fig. 6, the power source module 10 is located in the data center 30, i.e. the power source module 10 is comprised by the data center 30. That is the power source module 10 provides electricity to the data center nonetheless, while it is physically included in the data center 30.

One of the main differences to the embodiment of Fig. 1 is that the power source module comprises an AC grid battery 14, which in turn includes a DC battery 17 connected to a bi-directional inverter 16, which allows conversion of the DC electricity provided by the DC battery 17 to AC electricity and for charging the DC battery using the AC electricity provided via the bi-directional inverter 16. The AC grid battery 14 is configured such that in case an electricity is provided from the DC battery 17 the converted electricity is synchronous to the electricity of the electricity grid and/or the reciprocating gas engine 12-1. This function may be achieved by selecting the appropriate bi-directional inverter 17.

The AC grid battery 14 at the power source module 10 allows for essentially instantaneous electricity provision and generation by the power source module 10 for example in case the electricity grid 2and/or the data center 30 experiences a sudden load change. The reciprocating gas engine 12-1 while having the advantage of virtually unlimited run time/ capacity, suffers from a start-up time which is required for the reciprocating gas engine 12-1 to convert gas to electricity in a stable fashion and to provide the electricity to the grid or the data center in a sufficient amount. During this start-up time, which may be in the order of several minutes, e.g. up to 15 minutes, the AC grid battery assumes the provision of the required electricity, such that even under sudden and rapid load changes the electricity grid 2 may be stabilized or the data center will be provided by the prime-rated energy source with electricity by the power source module 10.

The interplay between the reciprocating gas engine 12-1 and the AC grid battery may be controlled by a controller or the control system, which may be as well configured to determine the required electricity.

The power source module 10 may optionally comprise the filter assembly 15, with a membrane and/or a PSA filter, that is configured to extract the hydrogen from the gas mix, such that the reciprocating gas engine 12-1 is provided with pure hydrogen (in case the reciprocating gas engine runs on hydrogen). For some reciprocating gas engines configured to combust hydrogen, it is sufficient that the filter assembly 15 solely comprises the membrane filter, as the reciprocating gas engine may not require hydrogen of particular high purity.

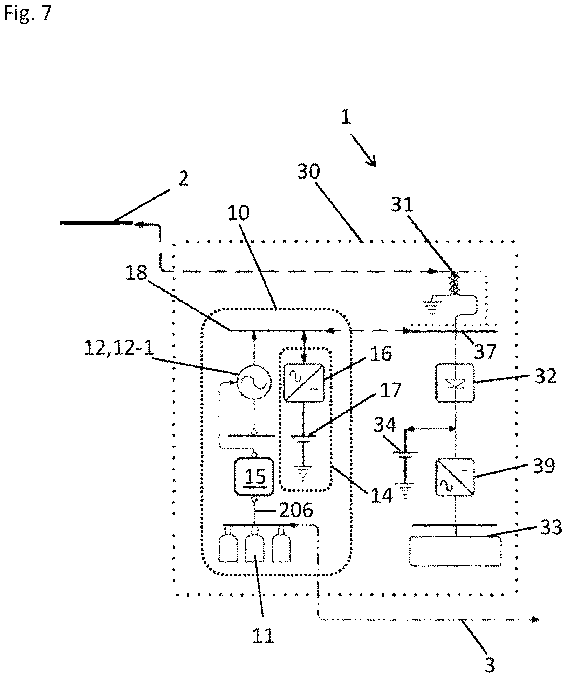

Fig. 7 in turn shows a similar embodiment as depicted in Fig. 1 and Fig. 6, wherein the system does not comprise the energy conversion module. The embodiment of Fig. 7 comprises the power source module 10 which comprises an AC grid battery 14, which in turn includes a DC battery 17 connected to a bi-directional inverter 16, which allows conversion of the DC electricity provided by the DC battery 17 to AC electricity and for charging the DC battery using the AC electricity provided via the bi-directional inverter 16. The AC grid battery 14 is configured such that in case an electricity is provided from the DC battery 17 the converted electricity is synchronous to the electricity of the electricity grid and/or the reciprocating gas engine 12-1. This function may be achieved by selecting the appropriate bi-directional inverter 17.

The AC grid battery 14 is connected to an electrical connection element 18 in the power source module to which the reciprocating gas engine 12-1 is electrically connected as well. This allows for charging the grid battery 14 with the reciprocating gas engine 12-1 via the inverter 16. The system 1 may comprise a controller (not shown) or the controller system that is configured to control the charging of the AC grid battery 14 by the reciprocating gas engine 12-1. The controller may alternatively or additionally be configured to determine a charge of the grid battery 14, particularly to estimate a remaining capacity and/or to schedule a charging or discharging cycle. Charging may be achieved with the reciprocating gas engine 12-1 or the electricity grid 2. The grid battery 14 may be housed separately to the reciprocating gas engine 12-1 in the power source module.

The AC grid battery 14 at the power source module 10 allows for essentially instantaneous electricity provision and generation by the power source module 10 for example in case the electricity grid 2and/or the data center 30 experiences a sudden load change. The reciprocating gas engine 12-1 while having the advantage of virtually unlimited run time/ capacity, suffers from a start-up time which is required for the reciprocating gas engine 12-1 to convert gas to electricity in a stable fashion and to provide the electricity to the grid or the data center in a sufficient amount. During this start-up time, which may be in the order of several minutes, e.g. up to 15 minutes, the AC grid battery assumes the provision of the required electricity, such that even under sudden and rapid load changes the electricity grid 2 may be stabilized or the data center will be provided by the prime-rated energy source with electricity by the power source module 10.

The interplay between the reciprocating gas engine 12-1 and the AC grid battery may be controlled by a controller or the control module, which may be as well configured to determine the required electricity.

The gas provided to the system may stem from the gas network 3, which may be provided with gas from various sources, particularly wherein at least some of said sources, may generate or provide gas from regenerative or renewable energy sources, such as solar, wind, and/or biogas. The system 1 of Fig. 7 particularly allows for carbon neutral grid stabilization and data center operation.

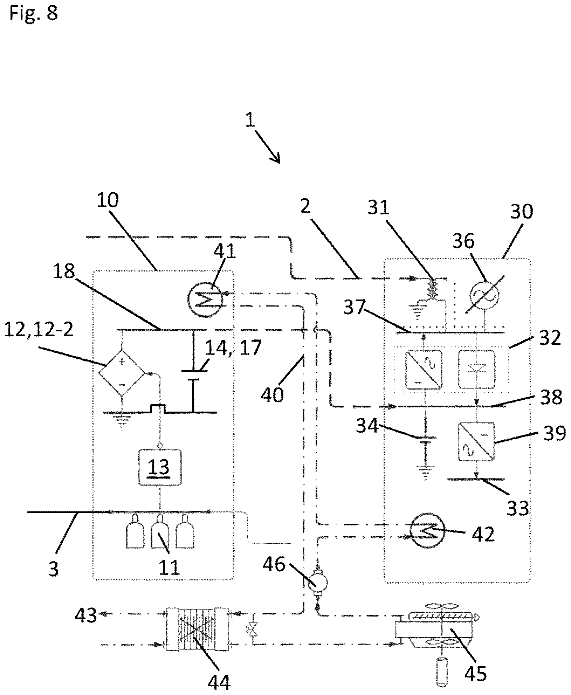

Fig. 8 in turn shows a similar embodiment as depicted in the Fig. 3, wherein in contrast of Fig. 3, the embodiment of Fig. 8 does not comprise an energy conversion module. The system 1 of Fig. 8 comprises a power source module 10 that comprises a fuel cell 12-2 as the gas-powered electricity generator, and a grid battery 14, wherein the grid battery 14 is a DC grid battery 17 that is connected to an electrical connection element 18 in the power source module to which the fuels cell 12-2 is electrically connected as well. This allows for charging the DC battery via the fuel cell 12-2. The system 1 may comprise a controller (not shown) or the controller system that is configured to control the charging of the DC-battery 17 by the fuel cell 12-2. The controller may alternatively or additionally be configured to determine a charge of the DC battery, particularly to estimate a remaining capacity and/or to schedule a charging or discharging cycle. Charging may be achieved via the fuel cell or the electricity grid 2. The grid battery 14 may be housed separately to the fuel cell 12-2. The heat recovery system 40 is not an essential part of the system but may be optionally included to increase efficient use of resources and to reduce a carbon footprint of the system 1. Particularly the power source module 10 may be housed separately from the data center 30.

Components which have been elaborated in the context of preceding embodiments and figures are not reiterated here in order to reduce redundancy. It is noted however, that features, definitions as well as functions disclosed in preceding embodiments and figures, may be applicable to the components of Fig. 6, 7 and 8 accordingly.

The system according to the invention allows for efficient and particularly carbon neutral grid stabilization and data center operation.

## Claims

1. A data center system (1), comprising at least the following components: a data center (30), and a power source module (10), wherein
- the data center (30) is connected to at least two prime-rated electricity sources configured to provide electricity to the data center (30), wherein a prime-rated first electricity source is an electricity grid (2) and wherein a second prime-rated electricity source is the power source module (10), wherein
- the power source module (10) comprises a gas-powered electricity generator (12, 12-1, 12-2) to generate electricity from gas, wherein the power source module (10) is connected to a gas network (3), wherein the power source module (10) is further connected to the data center (30), wherein,
the system (1) is configured to provide electricity from the power source module (10) to the data center (30), such as to reduce a load on the electricity grid (2) and such that the data center (1) may be supplied by the at least two prime-rated electricity sources simultaneously, wherein the system (1) comprises a grid battery (14) configured to supply electricity to the electricity grid (2) wherein the data center (30) comprises components configured to rectify or to convert the electricity from the power source module (10) from AC to DC wherein the system (1) is configured to provide electricity from the power source module (10) via the data center (30) synchronously to the electricity provided by the electricity grid (2), wherein the electricity grid (2) is connected to a common conducting element (37) that is further connected to a bi-directional converter (32) or a rectifier of the data center (10), **characterized in that**
the power source module (10) comprises a reciprocating gas engine (12-1) configured to burn gas provided to the power source module (10) to generate AC-electricity, wherein the power source module (10) is connected to the common conducting element (37) enabling grid stabilization with the synchronized electricity sources at the data center (30).

2. A data center system (1), comprising at least the following components: a data center (30), and a power source module (10), wherein
- the data center (30) is connected to at least two prime-rated electricity sources configured to provide electricity to the data center (30), wherein a prime-rated first electricity source is an electricity grid (2) and wherein a second prime-rated electricity source is the power source module (10), wherein
- the power source module (10) comprises a gas-powered electricity generator (12, 12-1, 12-2) to generate electricity from gas, wherein the power source module (10) is connected to a gas network (3), wherein the power source module (10) is further connected to the data center (30), wherein, the system (1) is configured to provide electricity from the power source module (10) to the data center (30), such as to reduce a load on the electricity grid (2) and such that the data center (1) may be supplied by the at least two prime-rated electricity sources simultaneously, wherein the system (1) comprises a grid battery (14) configured to supply electricity to the electricity grid (2), wherein the electricity grid (2) is connected to a common conducting element (37) that is further connected to a bi-directional converter (32), wherein
- the power source module (10) is configured to generate DC electricity and comprises a fuel cell (12-2) configured to convert gas into DC electricity, wherein the power source module (10) is connected downstream of the bi-directional converter (32) to power the data center (30) or to convert the DC electricity to AC electricity via the bi-directional converter (32) such as to use the converted and synchronized AC electricity for grid stabilization via the common conducting element (37) upstream the bi-directional converter (32), wherein the data center (30) comprises a further converter (39) configured to convert DC-electricity provided by the power source module (10) downstream of the bi-directional converter (32) into AC-electricity to power a data center server (33) of the data center (30).

3. The system (1) according to any of the preceding claims, wherein the system (1) comprises an energy conversion module (20) that is connected to a regenerative energy source (4) configured to produce electricity, as well as to the gas network (3), wherein the energy conversion module (20) is configured to generate gas, comprising or consisting of hydrogen and/or methane using electricity from the regenerative energy source (4), wherein the energy conversion module (20) is configured to feed the generated gas into the gas network (3).

4. The system (1) according to any of the preceding claims, wherein the grid battery (14) is configured to instantaneously supply electricity to the electricity grid (2) during start-up times of the gas-powered electricity generator (12) of the power source module (10).

5. The system (1) according to any of the preceding claims, wherein the grid battery (14) is connected to and/or comprised by the power source module (10).

6. The system according to any of the preceding claims, wherein the data center (30) further comprises a standby electricity source in form of an uninterruptible power source (34, UPS), wherein the grid battery (14) is comprised by the UPS (34).

7. The system (1) according to any of the preceding claims, wherein the power source module (10) is comprised in a first facility, such as a first container or a first pod local to the data center (30).

8. The system (1) according to claim 7, wherein the system (1) is a modular system (1) comprising a plurality of data centers (30), a plurality of first facilities (10) that are interconnected by the gas network (3), wherein each first facility (10) is arranged locally and connected to one of the data centers (30) of the plurality of data centers (30).

9. The system (1) according to claim 8, wherein each data center (30) is connected to the electricity grid (2), wherein each power source module (10) associated to the data center (30) is configured to provide electricity to the data center (30) and to the electricity grid (2) to which the data center (30) is connected to synchronously provide the electricity to the electricity grid (2).

10. The system according to any of the preceding claims, wherein the system (1) is configured to provide electricity from the power source module (10) to the data center (30), such as to export power to the electricity grid (2).

## Patentansprüche

1. Ein Datencentersystem (1), das zumindest die folgenden Komponenten umfasst: ein Datencenter (30) und ein Energiequellenmodul (10), wobei
- das Datencenter (30) mit mindestens zwei Primärenergieversorgungsstromquellen verbunden ist, die konfiguriert sind, Strom für das Datencenter (30) bereitzustellen, wobei eine erste Primärenergieversorgungsstromquelle ein Stromnetz (2) ist und wobei eine zweite Primärenergieversorgungsstromquelle das Energiequellenmodul (10) ist, wobei
- das Energiequellenmodul (10) einen gasbetriebenen Stromgenerator (12, 12-1, 12-2) zur Erzeugung von Strom aus Gas umfasst, wobei das Energiequellenmodul (10) mit einem Gasnetz (3) verbunden ist, wobei das Energiequellenmodul (10) ferner mit dem Datencenter (30) verbunden ist, wobei,
das System (1) so konfiguriert ist, dass es Strom von dem Energiequellenmodul (10) an das Datencenter (30) bereitstellt, um eine Belastung des Stromnetzes (2) zu verringern, und so, dass das Datencenter (1) von den mindestens zwei Primärenergieversorgungsstromquellen gleichzeitig versorgt werden kann, wobei das System (1) eine Netzbatterie (14) umfasst, die konfiguriert ist, um Strom an das Stromnetz (2) zu liefern, wobei das Datencenter (30) Komponenten umfasst, die konfiguriert sind, um den Strom von dem Energiequellenmodul (10) von Wechselstrom in Gleichstrom gleichzurichten oder umzuwandeln, wobei das System (1) konfiguriert ist, um Strom von dem Energiequellenmodul (10) über das Datencenter (30) synchron zu dem von dem Stromnetz (2) bereitgestellten Strom bereitzustellen, wobei das Stromnetz (2) mit einem gemeinsamen Leitelement (37) verbunden ist, das ferner mit einem bidirektionalen Wandler (32) oder einem Gleichrichter des Datencenters (30) verbunden ist, **dadurch gekennzeichnet, dass** das Energiequellenmodul (10) einen Gasmotor (12-1) umfasst, der so konfiguriert ist, dass er Gas verbrennt, das dem Energiequellenmodul (10) bereitgestellt wird, um Wechselstrom zu erzeugen, wobei das Energiequellenmodul (10) mit dem gemeinsamen Leitelement (37) verbunden ist, das eine Netzstabilisierung mit den synchronisierten Stromquellen am Datencenter (30) ermöglicht.

2. Ein Datencentersystem (1), das zumindest die folgenden Komponenten umfasst: ein Datencenter (30) und ein Energiequellenmodul (10), wobei
- das Datencenter (30) mit mindestens zwei Primärenergieversorgungsstromquellen verbunden ist, die konfiguriert sind, um Strom für das Datencenter (30) bereitzustellen, wobei eine erste Primärenergieversorgungsstromquelle ein Stromnetz (2) ist und wobei eine zweite Primärenergieversorgungsstromquelle das Energiequellenmodul (10) ist, wobei
- das Energiequellenmodul (10) einen gasbetriebenen Stromgenerator (12, 12-1, 12-2) umfasst, um Strom aus Gas zu erzeugen, wobei das Energiequellenmodul (10) mit einem Gasnetz (3) verbunden ist, wobei das Energiequellenmodul (10) ferner mit dem Datencenter (30) verbunden ist, wobei das System (1) konfiguriert ist, um Strom von dem Energiequellenmodul (10) dem Datencenter (30) bereitzustellen, wobei das System (1) eine Netzbatterie (14) umfasst, die konfiguriert ist, um Strom an das Stromnetz (2) zu liefern, wobei das Stromnetz (2) an ein gemeinsames Leitelement (37) angeschlossen ist, das ferner an einen bidirektionalen Wandler (32) angeschlossen ist, wobei das System (1) konfiguriert ist, um Strom an das Stromnetz (2) zu liefern, wobei das System (1) konfiguriert ist, um Strom von dem Energiequellenmodul (10) an das Datencenter (30) zu liefern, um eine Last auf dem Stromnetz (2) zu reduzieren, und wobei das Datencenter (1) von den mindestens zwei Primärenergieversorgungsstromquellen gleichzeitig versorgt werden kann, wobei
- das Energiequellenmodul (10) so konfiguriert ist, dass es Gleichstrom erzeugt, und eine Brennstoffzelle (12-2) umfasst, die so konfiguriert ist, dass sie Gas in Gleichstrom umwandelt, wobei das Energiequellenmodul (10) mit dem bidirektionalen Wandler (32) stromabwärts verbunden ist, um das Datencenter (30) mit Strom zu versorgen oder den Gleichstrom über den bidirektionalen Wandler (32) in Wechselstrom umzuwandeln, um den umgewandelten und synchronisierten Wechselstrom über das gemeinsame Leitelement (37) stromaufwärts des bidirektionalen Wandlers (32) zur Netzstabilisierung zu verwenden, wobei das Datencenter (30) einen weiteren Wandler (39) umfasst, der konfiguriert ist, um Gleichstrom, der von dem Energiequellenmodul (10) stromabwärts des bidirektionalen Wandlers (32) bereitgestellt wird, in Wechselstrom umzuwandeln, um einen Datencenterserver (33) des Datencenters (30) zu versorgen.

3. Das System (1) nach einem der vorhergehenden Ansprüche, wobei das System (1) ein Energieumwandlungsmodul (20) umfasst, das mit einer regenerativen Energiequelle (4), die konfiguriert ist, um Strom zu erzeugen, sowie mit dem Gasnetz (3) verbunden ist, wobei das Energieumwandlungsmodul (20) dazu eingerichtet ist, unter Verwendung von Strom aus der regenerativen Energiequelle (4) Gas zu erzeugen, das Wasserstoff und/oder Methan umfasst oder daraus besteht, wobei das Energieumwandlungsmodul (20) dazu eingerichtet ist, das erzeugte Gas in das Gasnetz (3) einzuspeisen.

4. Das System (1) nach einem der vorhergehenden Ansprüche, wobei die Netzbatterie (14) so eingerichtet ist, dass sie während der Startzeiten des gasbetriebenen Stromgenerators (12) des Energiequellenmoduls (10) sofort Strom in das Stromnetz (2) liefert.

5. Das System (1) nach einem der vorhergehenden Ansprüche, wobei die Netzbatterie (14) mit dem Energiequellenmodul (10) verbunden ist und/oder von diesem umfasst wird.

6. Das System nach einem der vorhergehenden Ansprüche, wobei das Datencenter (30) weiterhin eine Notstromquelle in Form einer unterbrechungsfreien Stromquelle (34, UPS) umfasst, wobei die Netzbatterie (14) von der UPS (34) umfasst wird.

7. Das System (1) nach einem der vorhergehenden Ansprüche, wobei das Energiequellenmodul (10) eine erste Einrichtung, wie einen ersten Container oder einen ersten Pod, der sich in der Nähe des Datencenters (30) befindet, umfasst.

8. Das System (1) nach Anspruch 7, wobei das System (1) ein modulares System (1) ist, das eine Vielzahl von Datencentern (30) und eine Vielzahl von ersten Einrichtungen (10) umfasst, die durch das Gasnetz (3) miteinander verbunden sind, wobei jede erste Einrichtung (10) lokal angeordnet und mit einem der Datencenter (30) der Vielzahl von Datencentern (30) verbunden ist.

9. Das System (1) nach Anspruch 8, wobei jedes Datencenter (30) mit dem Stromnetz (2) verbunden ist, wobei jedes dem Datencenter (30) zugeordnete Energiequellenmodul (10) so konfiguriert ist, dass es dem Datencenter (30) und dem Stromnetz (2), an das das Datencenter (30) angeschlossen ist, Strom bereitstellt, um den Strom synchron an das Stromnetz (2) zu liefern.

10. Das System nach einem der vorhergehenden Ansprüche, wobei das System (1) so konfiguriert ist, dass es Strom vom Energiequellenmodul (10) für das Datencenter (30) bereitstellt, um beispielsweise Strom in das Stromnetz (2) zu exportieren.

## Revendications

1. Système de centre de données (1), comprenant au moins les composants suivants :
un centre de données (30) et un module de source d'alimentation (10), dans lequel
- le centre de données (30) est connecté à au moins deux sources d'électricité de base configurées pour fournir de l'électricité au centre de données (30), dans lequel une première source d'électricité de base est un réseau électrique (2) et dans lequel une seconde source d'électricité de base est le module de source d'alimentation (10), dans lequel
- le module de source d'alimentation (10) comprend un générateur d'électricité alimenté par du gaz (12, 12-1, 12-2) pour générer de l'électricité à partir de gaz, dans lequel le module de source d'alimentation (10) est connecté à un réseau de gaz (3), dans lequel le module de source d'alimentation (10) est en outre connecté au centre de données (30), dans lequel
le système (1) est configuré pour fournir de l'électricité du module de source d'alimentation (10) au centre de données (30) de manière à réduire une charge sur le réseau électrique (2) et de sorte que le centre de données (1) peut être alimenté par les au moins deux sources d'électricité de base simultanément, dans lequel le système (1) comprend une batterie de polarisation de grille (14) configurée pour alimenter en électricité le réseau électrique (2), dans lequel le centre de données (30) comprend des composants configurés pour redresser ou pour convertir l'électricité provenant du module de source d'alimentation (10) de CA à CC, dans lequel le système (1) est configuré pour fournir de l'électricité du module de source d'alimentation (10) par le biais du centre de données (30) de manière synchrone à l'électricité fournie par le réseau électrique (2), dans lequel le réseau électrique (2) est connecté à un élément conducteur commun (37) qui est en outre connecté à un convertisseur bidirectionnel (32) ou un redresseur du centre de données (10),
**caractérisé en ce que**
le module de source d'alimentation (10) comprend un moteur alternatif à gaz (12-1) configuré pour brûler du gaz fourni au module de source d'alimentation (10) pour générer de l'électricité CA, dans lequel le module de source d'alimentation (10) est connecté à l'élément conducteur commun (37) permettant une stabilisation de réseau avec les sources d'électricité synchronisées au niveau du centre de données (30).

2. Système de centre de données (1), comprenant au moins les composants suivants : un centre de données (30) et un module de source d'alimentation (10), dans lequel
- le centre de données (30) est connecté à au moins deux sources d'électricité de base configurées pour fournir de l'électricité au centre de données (30), dans lequel une première source d'électricité de base est un réseau électrique (2) et dans lequel une seconde source d'électricité de base est le module de source d'alimentation (10), dans lequel
- le module de source d'alimentation (10) comprend un générateur d'électricité alimenté par du gaz (12, 12-1, 12-2) pour générer de l'électricité à partir de gaz, dans lequel le module de source d'alimentation (10) est connecté à un réseau de gaz (3), dans lequel le module de source d'alimentation (10) est en outre connecté au centre de données (30), dans lequel le système (1) est configuré pour fournir de l'électricité du module de source d'alimentation (10) au centre de données (30) de manière à réduire une charge sur le réseau électrique (2) et de sorte que le centre de données (1) peut être alimenté par les au moins deux sources d'électricité de base simultanément, dans lequel le système (1) comprend une batterie de polarisation de grille (14) configurée pour alimenter en électricité le réseau électrique (2), dans lequel le réseau électrique (2) est connecté à un élément conducteur commun (37) qui est en outre connecté à un convertisseur bidirectionnel (32), dans lequel
- le module de source d'alimentation (10) est configuré pour générer de l'électricité CC et comprend une pile à combustible (12-2) configurée pour convertir du gaz en électricité CC, dans lequel le module de source d'alimentation (10) est connecté en aval du convertisseur bidirectionnel (32) pour alimenter le centre de données (30) ou pour convertir l'électricité CC en électricité CA par le biais du convertisseur bidirectionnel (32) de manière à utiliser l'électricité CA convertie et synchronisée pour une stabilisation de réseau par le biais de l'élément conducteur commun (37) en amont du convertisseur bidirectionnel (32), dans lequel le centre de données (30) comprend un autre convertisseur (39) configuré pour convertir de l'électricité CC fournie par le module de source d'alimentation (10) en aval du convertisseur bidirectionnel (32) en électricité CA pour alimenter un serveur de centre de données (33) du centre de données (30).

3. Système (1) selon l'une quelconque des revendications précédentes, dans lequel le système (1) comprend un module de conversion d'énergie (20) qui est connecté à une source d'énergie régénérative (4) configurée pour produire de l'électricité, ainsi qu'au réseau de gaz (3), dans lequel le module de conversion d'énergie (20) est configuré pour générer du gaz, comprenant ou constitué d'hydrogène et/ou de méthane en utilisant de l'électricité provenant de la source d'énergie régénérative (4), dans lequel le module de conversion d'énergie (20) est configuré pour alimenter le gaz généré dans le réseau de gaz (3).

4. Système (1) selon l'une quelconque des revendications précédentes, dans lequel la batterie de polarisation de grille (14) est configurée pour alimenter instantanément en électricité le réseau électrique (2) au cours des moments de démarrage du générateur d'électricité alimenté par du gaz (12) du module de source d'alimentation (10).

5. Système (1) selon l'une quelconque des revendications précédentes, dans lequel la batterie de polarisation de grille (14) est connectée à et/ou comprise par le module de source d'alimentation (10).

6. Système (1) selon l'une quelconque des revendications précédentes, dans lequel le centre de données (30) comprend en outre une source d'électricité de réserve sous la forme d'une source d'alimentation ininterruptible (34, UPS), dans lequel la batterie de polarisation de grille (14) est comprise par la UPS (34).

7. Système (1) selon l'une quelconque des revendications précédentes, dans lequel le module de source d'alimentation (10) est compris dans une première installation, telle qu'un premier conteneur ou une première nacelle locale au centre de données (30).

8. Système (1) selon la revendication 7, dans lequel le système (1) est un système modulaire (1) comprenant une pluralité de centres de données (30), une pluralité de premières installations (10) qui sont interconnectées par le réseau de gaz (3), dans lequel chaque première installation (10) est agencée localement et connectée à un des centres de données (30) de la pluralité de centres de données (30).

9. Système (1) selon la revendication 8, dans lequel chaque centre de données (30) est connecté au réseau électrique (2), dans lequel chaque module de source d'alimentation (10) associé au centre de données (30) est configuré pour fournir de l'électricité au centre de données (30) et au réseau électrique (2) auquel le centre de données (30) est connecté pour fournir l'électricité de manière synchrone au réseau électrique (2).

10. Système selon l'une quelconque des revendications précédentes, dans lequel le système (1) est configuré pour fournir de l'électricité du module de source d'alimentation (10) au centre de données (30) de manière à exporter de la puissance vers le réseau électrique (2).
